# EUROPEAN PATENT SPECIFICATION

(11) **EP 4 332 454 B1**
(45) Date of publication and mention of the grant of the patent: **04.11.2026**
(21) Application number: 22193080.3
(22) Date of filing: 31.08.2022
(51) Int. Cl.: F24F 11/83

(54) **METHOD FOR CONTROLLING A TEMPERATURE INFLUENCING SYSTEM AND TEMPERATURE INFLUENCING SYSTEM**
VERFAHREN ZUR STEUERUNG EINES TEMPERATURBEEINFLUSSUNGSSYSTEMS UND TEMPERATURBEEINFLUSSUNGSSYSTEM
PROCÉDÉ DE COMMANDE D'UN SYSTÈME INFLUENÇANT LA TEMPÉRATURE ET SYSTÈME INFLUENÇANT LA TEMPÉRATURE

(43) Date of publication of application: 06.03.2024
(73) Proprietor: Danfoss A/S, 6430 Nordborg (DK)
(72) Inventor: Jedrzejewski, Mariusz, 6430 Nordborg (DK); de Vries, Stanley, 6430 Nordborg (DK); Muhic, Miran, 6430 Nordborg (DK); Cerneka, Itzok, 6430 Nordborg (DK); Osojnik, Matjaz, 6430 Nordborg (DK); Canpolat, Ahmet, 6430 Nordborg (DK); Szekely, Tamas, 6430 Nordborg (DK); Bogar, Sinisa, 6430 Nordborg (DK)
(74) Representative: Keil & Schaafhausen Patentanwälte PartGmbB

(56) References cited:
- CN-A- 110 186 173
- CN-A- 113 339 907
- CN-A- 114 413 407
- CN-A- 114 608 127
- US-A1- 2012 016 526

## Description

The present invention relates to a method for controlling a temperature influencing system having a heat exchanger connected to a supply pipe arrangement and a fan for generating an air stream through the heat exchanger, wherein a flow of a heat carrying fluid is guided through the heat exchanger and a user can change the speed of the fan.

Furthermore, the invention relates to a temperature influencing system comprising a heat exchanger connected to a supply arrangement for a heat carrying fluid and a fan having a fan speed selection device.

US 2012/016526 A1 describes a heating ventilation and air conditioning management system and a method. A return air temperature signal and a supply air temperature signal are received, the return air temperature signal and the supply air temperature signal are compared to each other. The cooling valve is controlled based on the comparison. The fan is operated at minimum speed. When the cooling valve is operating on maximum capacity, the fan is controlled to operate above minimum speed.

CN 110 186 173 A describes a fan control method, an indoor unit, an air conditioner and computer readable storage medium. An indoor fan is controlled as follows: obtaining a first temperature of the heat exchange tube in the indoor heat exchanger, an a second temperature of the air outlet tube of the indoor heat exchanger; determining a temperature difference between the first temperature and the second temperature; according to the temperature difference and the opening degree of the electronic expansion valve of the air conditioner, the rotation speed of the indoor fan is controlled.

CN 113 339 907 A refers to a cold accumulation type air conditioner fan and a control method thereof. The cold accumulation type air conditioner fan comprises heat exchanger pipe, a cold accumulation module, a fan body and a controller, wherein the fan is used for driving air to flow through the heat exchanger pipes. The cold accumulation module is located above the heat exchanger pipes. Two ends of each heat exchange pipe are communicated with the two ends of each cold accumulation pipe respectively to form a closed refrigerant circulation pipeline. A flow adjusting valve is arranged on the refrigerant circulating pipeline and the controller is in signal connection with the flow adjusting valve and used for adjusting the opening degree of the flow adjusting valve. Such a system can be, for example, a HVAC system with which it is possible to influence the temperature in a room of a building. When the heat carrying fluid is warmer than the temperature of the air in the room, the air and the room are heated. When the heat carrying fluid is colder than the air in the room, the room is chilled.

The fan produces an air stream which can be uncomfortable for a user staying in the room. In such a situation the user often tends to reduce the speed of the fan to avoid an unpleasant draft. However, such an action is not optimal under the aspect of energy consumption.

The object underlying the invention is to provide a temperature influencing system having a low energy consumption.

This object is solved with a temperature influencing method as described at the outset, in that when the user changes the speed of the fan at the same time the flow of the heat carrying fluid through the heat exchanger is adjusted to a size in which a temperature difference of the heat carrying fluid over the heat exchanger or a return temperature from the heat exchanger is maintained at a predetermined value.

Thus, when the speed of the fan is reduced and the air stream decreases, the flow of the heat carrying fluid through the heat exchanger is reduced at the same time, so that the heat carrying fluid transports only the amount of heat through the heat exchanger which can be removed by the air stream. Thus, the temperature of the heat carrying fluid at the outlet of the heat exchanger is sufficiently low for heating or sufficiently high for cooling, so that a source of positive or negative heat influencing the heat carrying fluid can work in an optimum point of operation. A minimum temperature differential is crucial for chiller and heat pump efficiency. Furthermore, when the flow of the heat carrying fluid through the heat exchanger is lowered, when the fan speed is decreased, the power necessary for pumping the heat carrying fluid through the heat exchanger can also be reduced. Thus, energy is saved. The term "at the same time" allows a certain delay between the change of the fan speed and the adjustment of the flow.

In an alternative to the temperature difference over the heat exchanger it is also possible to use a return temperature from the heat exchanger as parameter which should be maintained at a predetermined value. Low return temperature is crucial for district heating systems or condensing gas boilers efficiency. In this case, basically the same advantages are achieved.

In an embodiment of the invention the user adjusts the fan speed stepwise. Thus, the fan speed can be adjusted to a number of at least two different discrete values. Consequently, only a corresponding number of different flows of the heat carrying fluid has to be adjusted. This simplifies the implementation of the method.

In an embodiment of the invention the flow of the heat carrying fluid is adjusted by means of a valve. A valve is a simple means which can adjust the flow of the heat carrying fluid by adjusting an opening degree or by adjusting a duty cycle of the valve.

In an embodiment of the invention the valve is calibrated in a set-up step for at least two different fan speeds. Preferably, the valve is calibrated for all different fan speeds which can be adjusted. When the temperature influencing system is installed, the installer can use a flow meter to measure the flow through the heat exchanger. The temperature influencing system is designed for a specific purpose, for example for a specific building or room arrangement. Thus, the flow of the heat carrying fluid for the maximum fan speed can be determined in advance. In the same way, the flow of the heat carrying fluid for reduced fan speeds can also be determined in advance. The valve can then be actuated to achieve the desired flows and the position of the valve (or the duty cycle) can be stored to be used later in order to adjust the valve when the speed of the fan has been changed.

In an embodiment of the invention a valve is used having an actuator which is connected to a speed selection device of the fan or a room controller. The connection between the fan speed selection device and the actuator can be wired or wireless. The actuator can be operated with the parameters determined in the set-up step. Thus, when the user operates the fan speed selection device to adjust the fan speed, a corresponding information is automatically given to the actuator which in turn adjusts the valve, so that a flow rate of the heat carrying fluid is adjusted which is adapted to the respective fan speed.

The object is solved with a temperature influencing system as described at the outset with the features according to claim 6.

As described above, when the speed of the fan and thus the flow of air through the heat exchanger is changed, the flow of the heat carrying fluid through the heat exchanger is changed as well, so as to maintain a constant or predetermined temperature difference over the heat exchanger. Thus, when the fan speed is reduced, the flow of the heat carrying fluid through the heat exchanger is reduced as well. When the fan speed is increased, the flow of the heat carrying fluid through the heat exchanger is also increased. As mentioned above, the return temperature from the heat exchanger can also be used as parameter. The use of the return temperature as parameter can be of advantage in particular in connection with a district heating system or condensing gas boiler, in which the return temperature must not exceed a predetermined level.

In an embodiment of the invention the fan speed selection device adjusts the fan speed stepwise. It is, for example, possible to use only two or three or four fan speeds. The consequence is that it is only necessary to adjust two, three or four different flows of the heat carrying fluid through the heat exchanger. Thus, the system can be made rather simple in construction.

In an embodiment of the invention the means for adjusting the flow of the heat carrying fluid comprise a valve. A valve is a simple device for adjusting a flow of a fluid.

In an embodiment of the invention the valve is calibrated for at least two fan speeds. For each fan speed, a flow of the heat carrying fluid can be determined in advance. In a set-up step the valve can be actuated until it has adjusted a flow which is adapted to a certain fan speed. This parameter, for example an opening degree of the valve, is stored and can be used in a later stage for adjusting the valve depending on the fan speed.

In an embodiment of the invention the valve comprises an actuator which is connected to the fan speed selection device or a room controller. Thus, when the speed of the fan is changed by actuating the fan speed selection device, the valve is automatically adjusted in order to allow only the flow of the heat carrying fluid which fits to the fan speed and the corresponding air stream.

An embodiment of the invention will now be described with reference to the drawing, in which:
- Fig. 1: is a schematic illustration of a temperature influencing system,
- Fig. 2: shows some graphs illustrating an embodiment of the present invention,
- Fig. 3: shows some graphs illustrating another embodiment of the invention, and
- Fig. 4: shows another embodiment of a temperature influencing system.

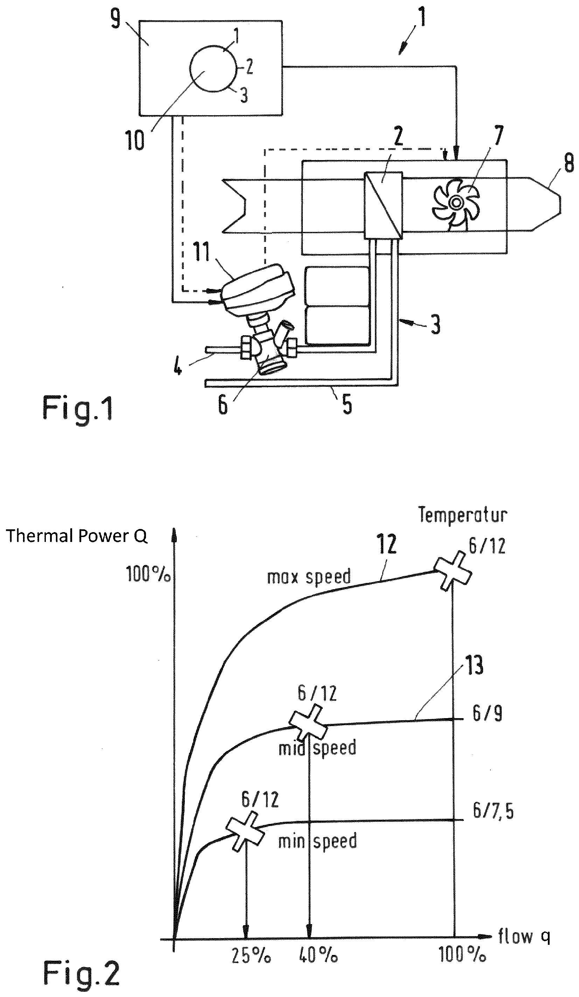

Fig. 1 shows schematically a temperature influencing system 1 comprising a heat exchanger 2 which is connected to a supply arrangement 3 for a heat carrying fluid. The supply arrangement 3 comprises a supply line 4 and a return line 5. A valve 6 is arranged in the supply line 4. It is also possible, to arrange the valve 6 in the return line 5.

A fan 7 is used to produce an air stream 8 through the heat exchanger 2.

The heat carrying fluid flowing through the supply arrangement 3 can be used to warm up the air stream 8 or to chill the air stream 8. In the first case, the temperature of the heat carrying fluid is higher than the temperature of the air stream 8 at the inlet of the heat exchanger 2. In the other case, the temperature of the heat carrying fluid is lower than the air temperature at the inlet of the heat exchanger 2.

A fan speed selection device 9 is used to adjust a speed of the fan 7. In the present case, the fan 7 can be operated in three different fan speeds, namely a max speed, a mid speed, and a min speed. It is, however, possible to use more different fan speeds. The fan speed selection device 9 can comprise, for example, a knob 10 which can be rotated in different angular positions, to select the max speed (No. 1), the mid speed (No. 2) or the min speed (No. 3). The fan speed selection device 9 can have another form, for example, can have one or more push-buttons to change the fan speed.

The valve 6 is provided with an actuator 11 which actuates the valve 6. In other words, the valve 6 can adjust the flow of the heat carrying fluid through the heat exchanger 2. When the valve 6 is actuated in opening direction, the flow of the heat carrying fluid through the heat exchanger 2 is increased. When the valve 6 is actuated in closing direction, the flow of heat carrying fluid through the heat exchanger 2 is decreased.

The fan speed selection device 9 can be directly connected to the fan 7 or it can be connected to the fan 7 via the actuator 11 or the valve 6 as indicated by a dashed line.

The valve 6 can be a rather simple valve, in which a size of an opening, for example the distance between a valve element and a valve seat in a seat valve or an overlap of two channels in a ball valve, can be changed in order to influence the flow of the heat carrying fluid. Each "opening degree" corresponds to a specific flow. It is also possible, to use another valve which adjusts the flow of heat carrying fluid by repeatedly open and closing completely the valve. In this case, the duty cycle of the valve determines the "opening degree".

The best results are achieved when the valve 6 is a pressure independent control valve (PICV) comprising a control valve of any type and a differential pressure controller. Here, the flow through the valve doesn't change when pressure across the valve is changing in variable flow HVAC-systems.

Not only the fan 7 is connected to the fan speed selection device 9, but also the actuator 11. Thus, when the speed of the fan 7 is selected by means of the fan speed selection device 9, the actuator 11 is operated at the same time in order to adjust the valve 6 which in turn adjusts the flow of the heat carrying fluid through the heat exchanger 2.

This is further illustrated with reference to Fig. 2. The horizontal axis shows the flow q of the heat carrying fluid through the heat exchanger 2 and the vertical axis shows the thermal power Q emitted to the room.

The system 1 is usually designed for a maximum speed of the fan 7 (corresponding to 100 % thermal power) and 100 % flow. This is illustrated by means of a graph 12. In this case, the inlet temperature of the heat carrying fluid at the inlet of the heat exchanger 2 can have a temperature of, for example, 6°C and the outlet temperature is 12°C. In other words, a temperature difference ΔT of 6°C is achieved.

When the speed of the fan 7 is adjusted via the fan speed selection device 9 to mid speed, a curve 13 would result. This curve shows that at 100 % flow and an inlet temperature of 6°C an outlet temperature of 9°C would be achieved, so that the temperature difference ΔT over the heat exchanger 2 would result to ΔT = 3°C.

In order to avoid a decrease of the temperature difference ΔT the flow of the heat carrying fluid through the heat exchanger 2 is reduced at the same time, in the present example to 40 %. In this way it is possible to achieve again a temperature difference ΔT = 6°C.

Again, when the speed of the fan 7 is further reduced, for example to a min speed, by actuating the fan speed setting device 9, a 100 % flow of heat carrying fluid through the heat exchanger 2 would lead to an outlet temperature of 7,5°C and consequently to a ΔT = 1,5°C.

In order to avoid this situation, the flow of the heat carrying fluid through the heat exchanger 2 is again reduced, for example to 25 %, so that again a temperature difference ΔT = 6°C is achieved.

The temperature influencing system 1 is usually designed for maximum fan speed and maximum flow through the heat exchanger 2. This "maximum" is presently named "100 %". The real flow volume depends on the system and can be determined in designing the system.

In a set-up procedure the temperature influencing system 1 can be operated at maximum speed of the fan 7 and 100 % flow. A flow meter can be used to determine the flow through the heat exchanger. If necessary, the maximum flow can be adjusted by means of the valve 6. The opening degree for the valve 6 for maximum flow can be stored, for example in the actuator 11.

The flow for the mid speed of the fan 7 can also be determined in advance, like the flow for the min speed of the fan 7.

In a further step, the flow corresponding to the mid speed of the fan 7 is adjusted using the valve 6 and the flow meter can be used to check whether this flow has been achieved. The opening degree of the valve 6 for this flow can also be stored in the actuator 11.

The same procedure can be performed for the min speed of the fan 7.

It is furthermore possible, to check in each adjustment step, whether the desired temperature difference ΔT of, for example, 6°C is achieved for the adjusted flow.

When the set-up has been finished, the flow meter can be removed, or it can be kept for continuous measurement.

In the subsequent operation, it is only necessary that the fan speed selection device 9 transmits an information about the selected speed of the fan 7 to the actuator 11 and the actuator 11 automatically adjusts the opening degree of the valve 6, so that the desired flow of heat carrying fluid through the heat exchanger 2 is achieved.

In particular in connection with cooling, it is of advantage that a minimum temperature difference over the heat exchanger 2 is maintained. Thus, the chiller or the heat pump can be operated at an optimum point of operation.

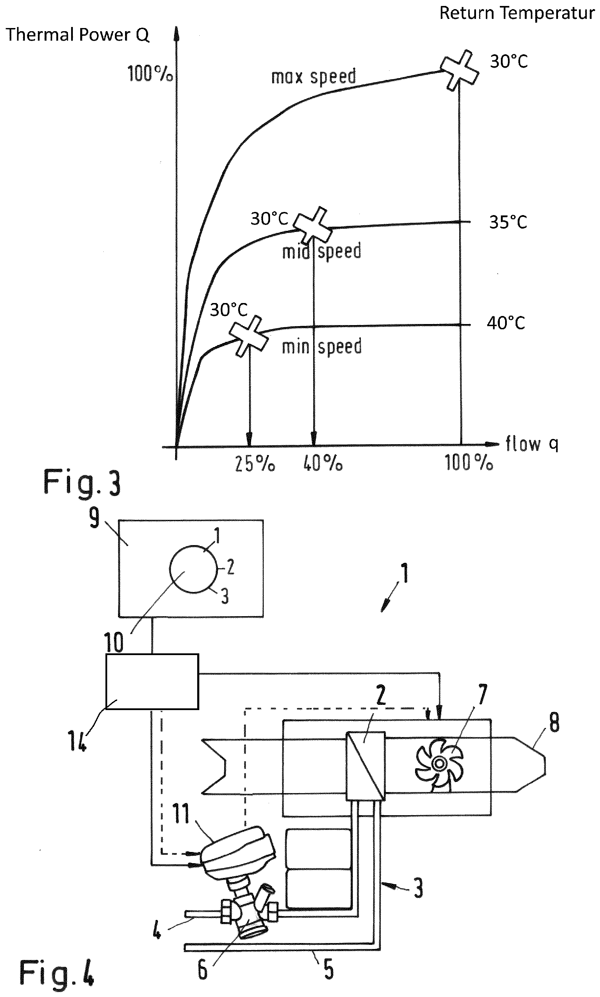

Fig. 3 shows the situation when the return temperature is used as parameter for adjusting the opening degree of the valve 6 depending on the speed of the fan 7 selected by means of the fan speed selection device 9.

When 100 % thermal power Q has to be emitted to the room, the flow q through the valve 6 is also 100 %. This results in a return temperature of 30° C.

If the fan speed is reduced, for example, to mid speed, a return temperature of 35° C would come out when the flow q is maintained at 100 %. Thus, the flow q is reduced by the valve 6 to 40 %, so that again the return temperature is 30° C.

When the speed of the fan 7 is further reduced to min speed, the return temperature would be 40° C using a flow q of 100 %. Thus, the flow q is reduced by means of the valve 6 to 25 %, so that again a return temperature of 30° C is achieved.

Fig. 4 shows a second embodiment of a temperature influencing system comprising in addition a room controller 14. The room controller 14 is connected to the fan speed selection device 9 and to the actuator 11 of the valve 6. Thus, the fan speed selection device 9 is connected to the fan 7 via the controller 14. The controller 14 controls the actuator 11 and the actuator 11 automatically adjusts the opening degree of the valve 6, so that the desired flow of the heat carrying fluid through the heat exchanger 2 is achieved.

## Claims

1. Method for controlling a temperature influencing system (1) having a heat exchanger (2) connected to a supply pipe arrangement (3) and a fan (7) for generating an air stream (8) through the heat exchanger (2), wherein a flow of a heat carrying fluid is guided through the heat exchanger (2) and a user can change the speed of the fan (7),
**characterized in that** when the user changes the speed of the fan (7) at the same time the flow of the heat carrying fluid through the heat exchanger (2) is adjusted to a size in which a temperature difference of the heat carrying fluid over the heat exchanger (2) or a return temperature from the heat exchanger (2) is maintained at a predetermined value.

2. Method according to claim 1, **characterized in that** the user adjusts the fan speed stepwise.

3. Method according to claim 1 or 2, **characterized in that** the flow of the heat carrying fluid is adjusted by means of a valve (6).

4. Method according to claim 3, **characterized in that** the valve (6) is calibrated in a set-up step for at least two different fan speeds.

5. Method according to claim 3 or 4, **characterized in that** the valve (6) is used having an actuator (11) which is connected to a speed selection device (9) of the fan (7) or to a room controller.

6. Temperature influencing system (1) comprising a heat exchanger (2) connected to a supply pipe arrangement (3) for a heat carrying fluid and a fan (7) having a fan speed selection device (9), wherein the supply pipe arrangement (3) comprises means for adjusting a flow of the heat carrying fluid to a size depending on the fan speed **characterized in that** the temperature influencing system (1) is configured such that when a user changes the speed of the fan (7) at the same time the flow of the heat carrying fluid through the heat exchanger (2) is adjusted to a size in which a temperature difference of the heat carrying fluid over the heat exchanger (2) or a return temperature from the heat exchanger (2) is maintained at a predetermined value.

7. Temperature influencing system according to claim 6, **characterized in that** the fan speed selection (9) device adjusts the fan speed stepwise.

8. Temperature influencing system according to claim 6 or 7, **characterized in that** the means for adjusting the flow of the heat carrying fluid comprise a valve (6).

9. Temperature influencing system according to claim 8, **characterized in that** the valve (6) is calibrated for at least two fan speeds.

10. Temperature influencing system according to claim 8 or 9, **characterized in that** the valve (6) comprises an actuator (11) which is connected to the speed selection device (9) or to a room controller.

## Patentansprüche

1. Verfahren zur Steuerung eines Temperaturbeeinflussungssystems (1) mit einem mit einer Versorgungsleitungsanordnung (3) verbundenen Wärmetauscher (2) und einem Gebläse (7) zur Erzeugung eines Luftstroms (8) durch den Wärmetauscher (2), wobei ein Strom eines wärmeführenden Fluids durch den Wärmetauscher (2) geleitet wird und ein Benutzer die Drehzahl des Gebläses (7) ändern kann,
**dadurch gekennzeichnet, dass** bei Änderung der Drehzahl des Gebläses (7) durch den Benutzer gleichzeitig der Strom des wärmeführenden Fluids durch den Wärmetauscher (2) auf eine Größe eingestellt wird, in der eine Temperaturdifferenz des wärmeführenden Fluids über den Wärmetauscher (2) oder eine Rückführtemperatur aus dem Wärmetauscher (2) auf einem vorbestimmten Wert gehalten wird.

2. Verfahren nach Anspruch 1, **dadurch gekennzeichnet, dass** der Benutzer die Gebläsedrehzahl schrittweise einstellt.

3. Verfahren nach Anspruch 1 oder 2, **dadurch gekennzeichnet, dass** der Strom des wärmeführenden Fluids mittels eines Ventils (6) eingestellt wird.

4. Verfahren nach Anspruch 3, **dadurch gekennzeichnet, dass** das Ventil (6) in einem Einrichtungsschritt für mindestens zwei unterschiedliche Gebläsedrehzahlen kalibriert wird.

5. Verfahren nach Anspruch 3 oder 4, **dadurch gekennzeichnet, dass** das Ventil (6) mit einem Aktuator (11) verwendet wird, der mit einer Drehzahlauswahleinrichtung (9) des Gebläses (7) oder mit einer Raumsteuerung verbunden ist.

6. Temperaturbeeinflussungssystem (1) mit einem Wärmetauscher (2), der mit einer Versorgungsleitungsanordnung (3) für ein wärmeführendes Fluid verbunden ist, und einem Gebläse (7) mit einer Gebläsedrehzahlauswahleinrichtung (9), wobei die Versorgungsleitungsanordnung (3) Mittel zum Einstellen eines Stroms des wärmeführenden Fluids auf eine Größe in Abhängigkeit von der Gebläsedrehzahl umfasst,
**dadurch gekennzeichnet, dass** das Temperaturbeeinflussungssystem (1) dazu ausgelegt ist, dass bei einer Änderung der Drehzahl des Gebläses (7) durch einen Benutzer gleichzeitig der Strom des wärmeführenden Fluids durch den Wärmetauscher (2) auf eine Größe eingestellt wird, in der eine Temperaturdifferenz des wärmeführenden Fluids über dem Wärmetauscher (2) oder eine Rückführtemperatur aus dem Wärmetauscher (2) auf einem vorbestimmten Wert gehalten wird.

7. Temperaturbeeinflussungssystem nach Anspruch 6, **dadurch gekennzeichnet, dass** die Gebläsedrehzahlauswahleinrichtung (9) die Gebläsedrehzahl stufenweise einstellt.

8. Temperaturbeeinflussungssystem nach Anspruch 6 oder 7, **dadurch gekennzeichnet, dass** die Mittel zur Einstellung des Stroms des wärmeführenden Fluids ein Ventil (6) umfassen.

9. Temperaturbeeinflussungssystem nach Anspruch 8, **dadurch gekennzeichnet, dass** das Ventil (6) für mindestens zwei Gebläsedrehzahlen kalibriert ist.

10. Temperaturbeeinflussungssystem nach Anspruch 8 oder 9, **dadurch gekennzeichnet, dass** das Ventil (6) einen Aktuator (11) umfasst, der mit der Drehzahlauswahleinrichtung (9) oder einer Raumsteuerung verbunden ist.

## Revendications

1. Procédé de commande d'un système influençant la température (1) ayant un échangeur de chaleur (2) relié à un agencement de tuyaux d'alimentation (3) et un ventilateur (7) pour générer un flux d'air (8) à travers l'échangeur de chaleur (2), dans lequel un écoulement d'un fluide caloporteur est guidé à travers l'échangeur de chaleur (2) et un utilisateur peut modifier la vitesse du ventilateur (7),
**caractérisé en ce que** lorsque l'utilisateur modifie la vitesse du ventilateur (7) en même temps l'écoulement du fluide caloporteur à travers l'échangeur de chaleur (2) est ajusté à une taille dans laquelle une différence de température du fluide caloporteur sur l'échangeur de chaleur (2) ou une température de retour de l'échangeur de chaleur (2) est maintenue à une valeur prédéterminée.

2. Procédé selon la revendication 1, **caractérisé en ce que** l'utilisateur ajuste la vitesse de ventilateur par étapes.

3. Procédé selon la revendication 1 ou la revendication 2, **caractérisé en ce que** l'écoulement du fluide caloporteur est ajusté au moyen d'une soupape (6).

4. Procédé selon la revendication 3, **caractérisé en ce que** la soupape (6) est calibrée dans une étape de mise en place pour au moins deux vitesses de ventilateur différentes.

5. Procédé selon la revendication 3 ou la revendication 4, **caractérisé en ce que** la soupape (6) est utilisée en ayant un actionneur (11) qui est relié à un dispositif de sélection de vitesse (9) du ventilateur (7) ou à un dispositif de commande de salle.

6. Système influençant la température (1) comprenant un échangeur de chaleur (2) relié à un agencement de tuyaux d'alimentation (3) pour un fluide caloporteur et un ventilateur (7) ayant un dispositif de sélection de vitesse de ventilateur (9), l'agencement de tuyaux d'alimentation (3) comprenant un moyen pour ajuster un écoulement du fluide caloporteur à une taille dépendant de la vitesse de ventilateur.
**caractérisé en ce que** le système influençant la température (1) est configuré de telle sorte que lorsqu'un utilisateur modifie la vitesse du ventilateur (7) en même temps l'écoulement du fluide caloporteur à travers l'échangeur de chaleur (2) soit ajusté à une taille dans laquelle une différence de température du fluide caloporteur sur l'échangeur de chaleur (2) ou une température de retour de l'échangeur de chaleur (2) soit maintenue à une valeur prédéterminée.

7. Système influençant la température selon la revendication 6, **caractérisé en ce que** le dispositif de sélection de la vitesse de ventilateur (9) ajuste la vitesse de ventilateur par étapes.

8. Système influençant la température selon la revendication 6 ou la revendication 7, **caractérisé en ce que** le moyen pour ajuster l'écoulement du fluide caloporteur comprend une soupape (6).

9. Système influençant la température selon la revendication 8, **caractérisé en ce que** la soupape (6) est calibrée pour au moins deux vitesses de ventilateur.

10. Système influençant la température selon la revendication 8 ou la revendication 9, **caractérisé en ce que** la soupape (6) comprend un actionneur (11) qui est relié au dispositif de sélection de vitesse (9) ou à un dispositif de commande de salle.
